# FASCICULE DE BREVET EUROPEEN

(11) **EP 1 199 197 B1**
(45) Date de publication et mention de la délivrance du brevet: **04.11.2009**
(21) Numéro de dépôt: 01123971.2
(22) Date de dépôt: 08.10.2001
(51) Int. Cl.: B60H 1/00, G05G 1/10

(54) **Dispositif de commande pour système de distribution d'un flux d'air dans un véhicule**
Luftstromsteuereinheit für Kraftfahrzeuge
Airflow distribution command system for automotive vehicles

(30) Priorité: 17.10.2000 FR 0013272
(43) Date de publication de la demande: 24.04.2002
(73) Titulaire: VALEO CLIMATISATION, 78321 La Verrière (FR)
(72) Inventeur: Lacroix, Louis Jean-Michel, 94500 Champigny s/Marne (FR)
(74) Mandataire: Camus, Olivier Jean-Claude

(56) Documents cités:
- DE-A- 19 610 148
- DE-U- 29 715 671
- FR-A- 1 447 250
- FR-A- 2 782 299
- US-A- 6 115 657

## Description

La présente invention concerne un dispositif de commande pour système de distribution d'un flux d'air de véhicule automobile qui convient plus particulièrement à une installation de chauffage ou de climatisation.

Dans les véhicules actuels, la place réservée sur la planche de bord pour les commandes en général est de plus en plus réduite car il est toujours prévu d'installer de nouveaux équipements comme les lecteurs de disques compacts ou, plus récemment, des combinés de type radio/lecteur de disques compacts/système de guidage par satellite. Or, les dispositifs de commandes de fonctions telles que le désembuage la ventilation ou climatisation sont primordiaux pour le confort et la sécurité des passagers. Ces commandes doivent donc être facilement accessibles, procurer une bonne prise en main, être facilement identifiables tout en prenant le moins de place possible. La sophistication de ces systèmes de ventilation a par ailleurs augmenté le nombre possible de fonctions, et a donc compliqué leur commande.

Une solution à ce problème a déjà été proposée dans le brevet FR 1 447 250, qui divulgue les caractéristiques du préambule de la revendication 1. Cette solution consiste à utiliser une commande unique permettant de doser l'intensité, la température et la répartition du débit d'un flux d'air envoyé dans l'habitacle du véhicule. Pour cela, on a recours à une manette de commande unique prévue sur l'extrémité d'une tige qui peut coulisser d'avant en arrière (ouverture ou fermeture du désembuage par exemple), tourner autour de son propre axe (réglage de la température) et pivoter selon un axe vertical perpendiculaire à l'axe de la tige (réglage du débit d'air).

Or, non seulement cette solution n'est pas du tout esthétique, mais en plus elle nécessite de grandes amplitudes dans les déplacements de la tige, notamment pour sa translation axiale et sa rotation selon l'axe vertical. Cela implique donc de réserver beaucoup de place dans la planche de bord, et notamment une découpe horizontale assez importante et disgracieuse. De plus, la combinaison d'un mouvement de translation et de deux mouvements de rotation rend le dispositif plus fragile et très compliqué à manipuler. Enfin, de part la combinaison possible des différents mouvements et de l'utilisation de câbles, les déplacements de la tige ne sont pas réellement indépendants les uns des autres. Par exemple en pivotant la tige autour de l'axe vertical pour régler le débit, on peut aussi agir légèrement sur le câble du réglage de température dès lors que l'on fait tourner une platine de support de ce câble. On comprendra donc que dans ce domaine, de nombreuses améliorations peuvent être apportées.

Le but de la présente invention est donc de résoudre une partie au moins de ces problèmes en proposant une solution simple à mettre en oeuvre, facile d'utilisation, compact, esthétique (intégration possible dans de nombreuses planches de bord) et peu coûteuse.

Pour cela, l'invention concerne un dispositif de commande mécanique permettant d'agir sur des organes de commande d'un système de distribution d'un flux d'air pour véhicule automobile, caractérisé en ce qu'il comprenant au moins deux moyens de commandes distincts à mouvement rotatif agissant respectivement de façon indépendante l'un par rapport à l'autre sur les organes de commande, un premier moyen de commande étant monté tournant autour d'un premier axe de rotation et portant un second moyen de commande monté tournant autour d'un deuxième axe de rotation incliné par rapport au premier axe de rotation.

Le premier moyen de commande est un bouton central muni d'une fente et le second moyen de commande est articulé dans ladite fente.

De préférence, le second moyen de commande est articulé sur le premier moyen de commande et tourne autour du second axe de rotation qui est perpendiculaire au premier axe de rotation.

Avantageusement, le second moyen de commande présentera des moyens pour transmettre, en tournant autour du second axe de rotation, un mouvement de translation le long du premier axe à une tige qui présente des moyens pour transformer ce mouvement de translation en un mouvement de rotation autour d'un troisième axe de rotation perpendiculaire au premier axe, ce mouvement de rotation étant transmis à une pièce latérale de commande.

En particulier, le second moyen de commande pourra être une molette qui présentera alors intérieurement une portion de roue dentée droite tournant autour du second axe de rotation pour agir sur une crémaillère à denture droite s'étendant le long du premier axe et solidaire de la tige, ladite tige étant par ailleurs munie, à l'extrémité opposée à la crémaillère, d'une succession de gorges parallèles qui agissent axialement comme des dents en prise avec une roue dentée de la pièce latérale de commande.

Selon un autre aspect de l'invention, le bouton central rotatif est lié à une extrémité d'un premier arbre tournant autour du premier axe de rotation, cet arbre présentant des moyens pour transformer son mouvement de rotation en un autre mouvement de rotation autour d'un quatrième axe de rotation perpendiculaire au premier axe pour faire tourner un premier levier de commande.

En particulier, le premier arbre du bouton de commande est muni, à son extrémité opposée, d'un engrenage conique en prise avec une portion de roue dentée conique du premier levier de commande.

Dans un souci d'optimisation de l'intégration des commandes, la tige est creuse et entoure le premier arbre du bouton central de façon à pouvoir coulisser axialement à l'extérieur de cet arbre le long du premier axe de rotation.

Toujours dans un souci d'optimisation du nombre de pièces présentes dans le mécanisme, le bouton central présente intérieurement deux oreilles espacées et parallèles au premier axe de rotation, ces oreilles étant traversées chacune d'un trou d'axe perpendiculaire au premier axe pour recevoir une partie tubulaire interne de la molette pour l'articulation de cette dernière autour du second axe de rotation.

En variante, le bouton central pourra présenter deux oreilles espacées et parallèles au premier axe de rotation, ces oreilles étant alors munies de protubérances coopérant avec une partie tubulaire de la molette pour l'articulation de cette dernière autour du second axe de rotation.

Afin de transmettre le mouvement de rotation du bouton central au premier arbre, celui-ci est muni axialement, à son extrémité de liaison au bouton central, d'une encoche définissant une liaison avec la partie tubulaire de la molette.

Afin de pouvoir déplacer la molette dans n'importe quelle position du bouton central, ladite molette présente également des moyens pour entraîner en rotation la tige par l'intermédiaire de la crémaillère.

En particulier, ces moyens sont constitués par deux parois parallèles s'étendant le long du premier axe de rotation et située dans l'environnement proche de la roue dentée pour entourer la crémaillère de part et d'autre en faisant office de butée latérale d'entraînement.

Toujours dans un souci d'intégration des commandes, le dispositif comprend en outre un troisième moyen de commande disposé autour du premier moyen et mobile en rotation autour du premier axe de rotation.

En particulier, ce troisième moyen de commande est constitué par une bague externe tournant autour du premier axe de rotation et munie de moyens pour faire tourner un second arbre autour d'un cinquième axe de rotation parallèle au premier axe, cet arbre présentant des moyens pour transformer son mouvement de rotation en un autre mouvement de rotation autour d'un sixième axe de rotation perpendiculaire au premier axe X1 pour faire tourner un second levier de commande.

De préférence, la bague présente une portion de pignon droit disposé sur sa périphérie externe et dont les dents sont en prise avec un engrenage droit monté à une extrémité du second arbre, ledit arbre présentant, à son autre extrémité, une vis sans fin agissant sur une portion de roue dentée droite du second levier de commande.

Selon d'autres caractéristiques de l'invention :
- le premier moyen commande agit sur la localisation spatiale du flux d'air.
- le second moyen commande agit sur la température du flux d'air.
- le troisième moyen commande agit sur la puissance du flux d'air.
- les moyens de commande et les organes de commande sont réalisés en matière plastique.

L'invention sera mieux comprise, et d'autres caractéristiques, détails et avantages de celle-ci apparaîtront plus clairement à la lecture de la description qui suit, faite à titre d'exemple en référence aux dessins annexés dans lesquels :
- la figure 1 est une vue d'ensemble en perspective éclatée d'un système de commande pour un dispositif de ventilation ou de climatisation de véhicule automobile.
- la figure 2 est une vue similaire à la figure 1 mais prise sous un autre angle.
- la figure 3 est une vue similaire à la figure 1 mais avec les éléments montés,
- la figure 4 est une vue similaire à la figure 2 mais avec les éléments montés,
- la figure 5 est une vue de détail en perspective d'un moyen de commande,
- la figure 6 est une vue de côté gauche de la figure 5,
- la figure 7 est une vue de détail en perspective d'un autre moyen de commande,
- la figure 8 est une vue de côté droit de la figure 7,
- la figure 9 est une vue de détail en perspective d'un autre moyen de commande,
- la figure 10 est une vue de côté droit de la figure 9, avec un des moyens de commande en butée,
- la figure 11 est une vue de côté droit similaire à la figure 10 mais avec le moyen de commande en butée opposée,
- la figure 12 est une autre vue de face du système,
- la figure 13 est une vue en coupe (AA) de la figure 12, et
- la figure 14 est une autre vue ne coupe (BB) de la figure 12.

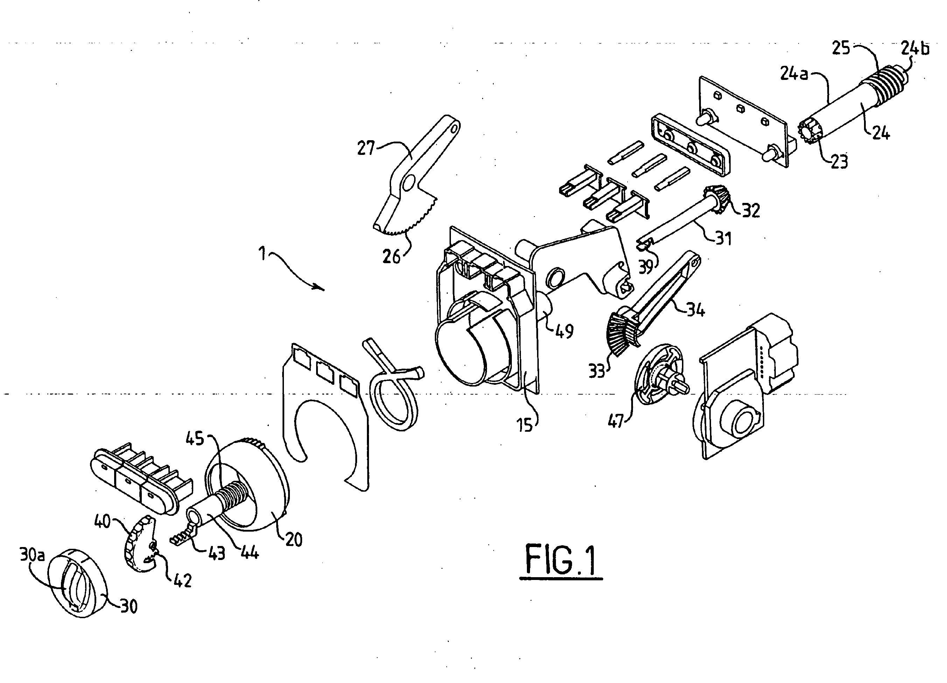

Sur la figure 1, on voit représenté un système de commande 1 mécanique pour climatisation de véhicule automobile, ce système étant en particulier monté sur une planche de bord (non représentée) de manière qu'une partie au moins de ses éléments soit accessible depuis l'habitacle du véhicule.

Ce système comprend globalement un dispositif de commande 10 associé à un groupe 110 d'organes de commandes. Pour simplifier, on dira que le dispositif de commande 10 est visible et directement accessible depuis l'habitacle pour être manipulé par un passager, tandis que les organes de commande constituent la cinématique à proprement parler du système 1 et sont donc situés en arrière de la planche de bord qui les masque.

Le dispositif de commande 10 comprend trois moyens de commande. Il est constitué par une bague externe 20, tournant autour d'un premier axe X1, un bouton central 30 concentrique à la bague 20 et tournant également autour de l'axe X1, et une molette 40 montée dans une fente verticale du bouton central 30 et tournant autour d'un second axe X2 perpendiculaire au premier axe X1.

A noter que cette fente pourrait prendre n'importe quelle autre orientation, sous réserve que la molette reste facilement utilisable.

Dans ce mode de réalisation préférentiel, la molette 40 agit sur la puissance du flux d'air propulsé par un pulseur ou un moto-ventilateur (non représenté), le bouton central 30 agit sur la température du flux d'air et la bague externe 20 agit sur la répartition spatiale (pieds, tête/thorax, désembuage) du flux d'air.

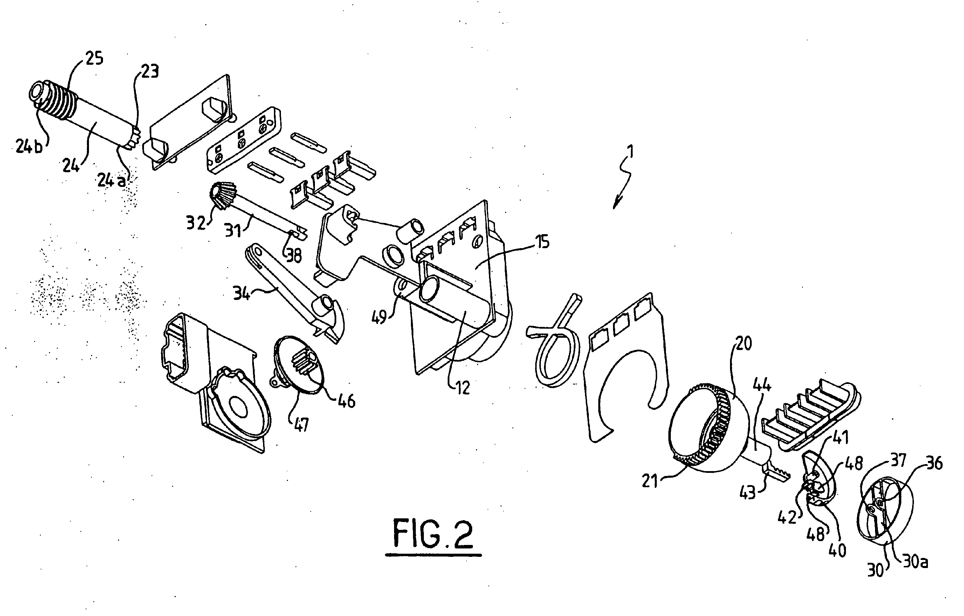

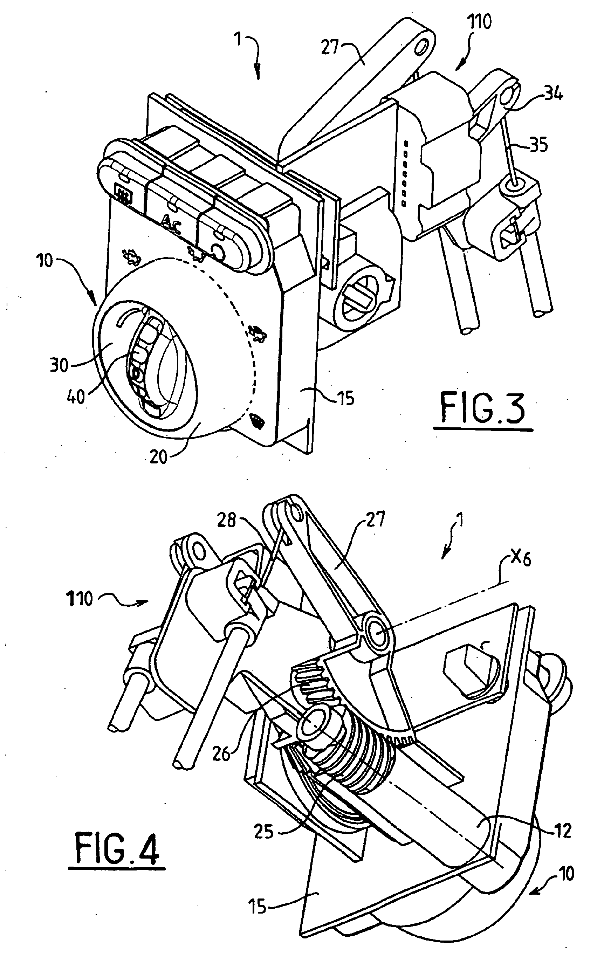

Comme on va le décrire plus loin, ces trois moyens de commande sont indépendants les uns des autres dans leur fonctionnement. Ainsi, lorsqu'on les manipule en rotation, ils commandent chacun leur propre organe de commande sans agir sur les autres organes, quand bien même deux des moyens de commandes sont liés mécaniquement comme on va le voir plus loin. Il n'y a donc aucune « interférence » mécanique entre les trois moyens de commande, même si ceux ci sont rassemblés dans une seule unité que l'on pourrait appeler actionneur intégré multifonctions et que l'on voit mieux sur les figures 2, 3 et 12.

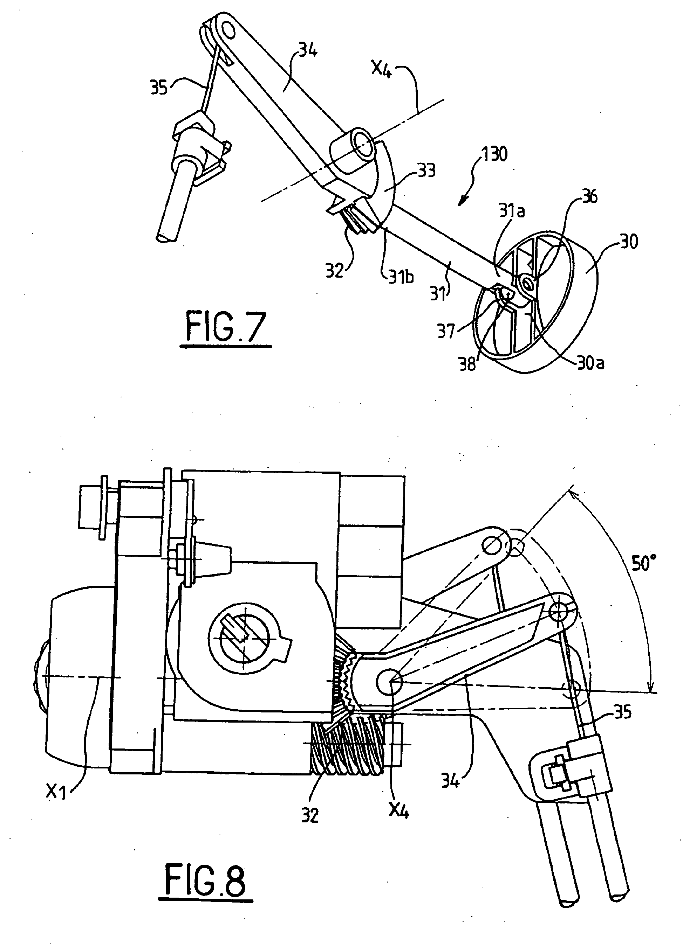

La figure 7 montre tout d'abord le bouton central 30 et son organe de commande 130. Ce bouton 30, concentrique à la bague 20, peut tourner autour du premier axe X1 de façon à agir sur la température du flux d'air (par exemple chaud vers la gauche et froid vers la droite). Il est lié à une extrémité 31a d'un premier arbre 31 également monté en rotation autour du premier axe X1. La liaison sera expliquée plus loin en relation avec la molette 40. Ce premier arbre 31 se termine, à son extrémité opposée 31b, par un engrenage conique 32 en prise avec une portion de roue 33 à engrenage conique d'un premier levier de commande 34 (voir également figure 1), ladite roue 33 tournant autour d'un quatrième axe de rotation X4 perpendiculaire au premier axe.

Ainsi, comme on peut également le voir sur la figure 8, en tournant le bouton central 30, on fait tourner le premier arbre 31 autour du premier axe X1. Cet arbre 31 fait tourner la roue dentée 33 du premier levier de commande 34 autour du quatrième axe X4, ledit levier agissant alors, via une tringlerie 35 prévue à cet effet, par exemple sur des volets (non représentés) qui gèrent le mixage de l'air chaud et de l'air froid.

A noter que l'engrenage conique 32 et la portion de roue conique 33 peuvent être remplacés par toute autre cinématique similaire, telle qu'un système à pignons droits ou à cames.

Comme on le voit sur la figure 8, le débattement angulaire du premier levier est d'environ 50° car le bouton central ne tourne que sur environ 150° (rapport sensiblement égal 3:1 entre l'engrenage conique du premier arbre et la roue dentée du levier).

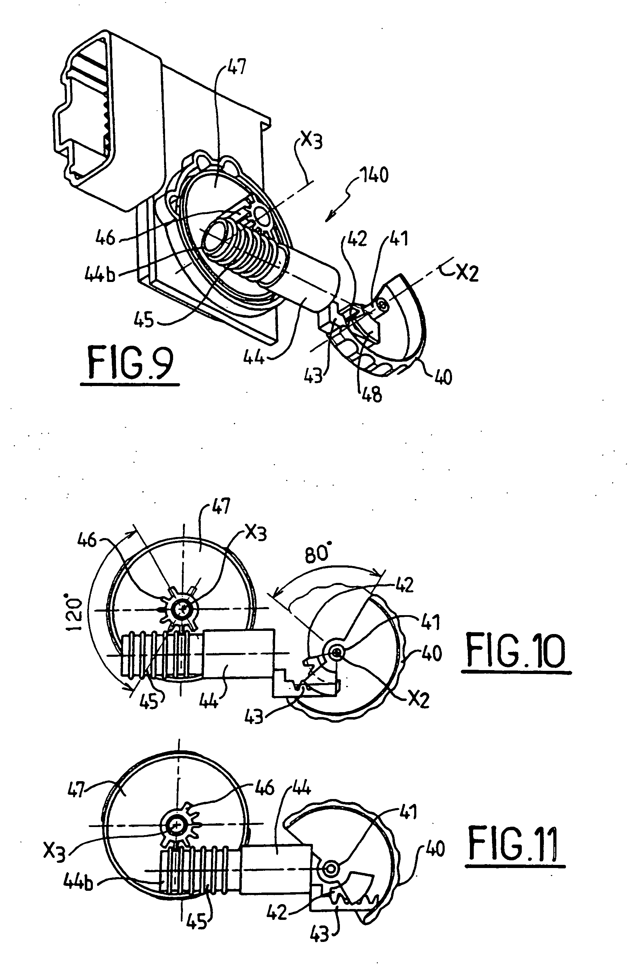

La figure 9 montre ensuite la molette 40 montée dans une fente verticale 30a du bouton central 30, et son organe de commande 140.

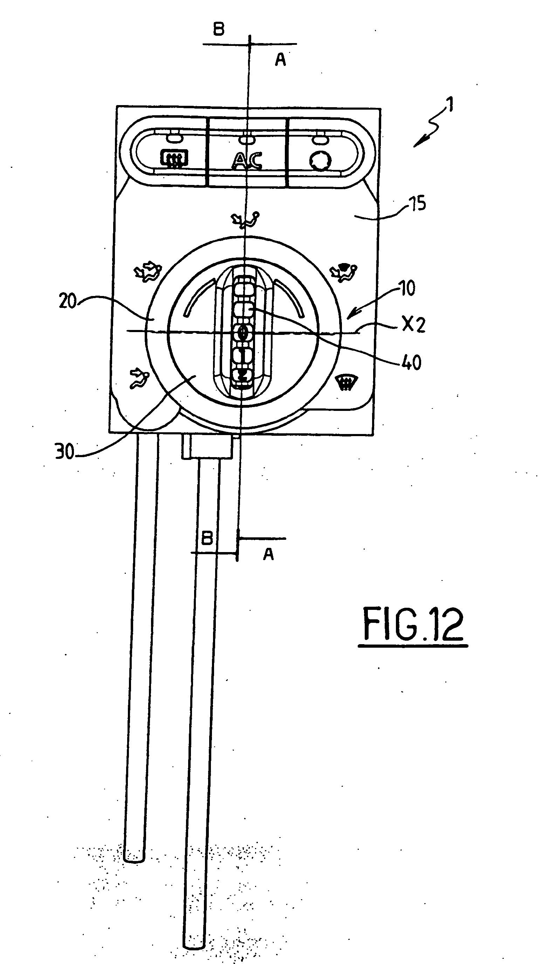

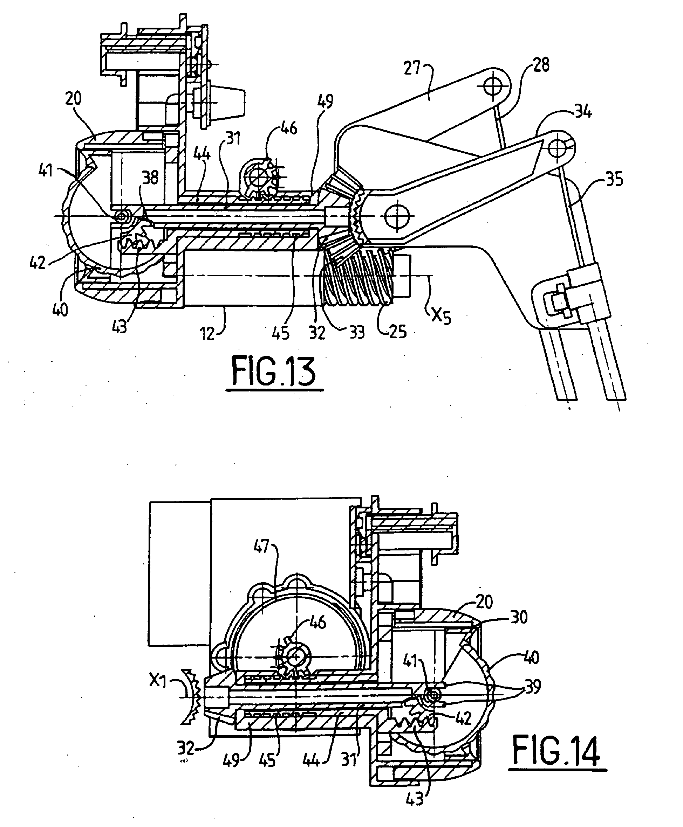

Cette molette 40 peut tourner autour du second axe de rotation X2 de façon à agir sur la puissance du flux d'air indiqué par les chiffres (0 à 4) de la figure 12. Cette molette 40 est légèrement crantée extérieurement pour une « prise en main » plus facile. Elle présente un axe de rotation matérialisé par une partie tubulaire 41 qui vient se placer dans deux orifices de deux oreilles 36/37 (voir figures 2 et 7) du bouton central 30. Cette partie tubulaire 41 sert par ailleurs de liaison en rotation entre le premier arbre 31 et la molette 40, comme on peut très bien le voir sur les figures 13 et 14. Pour cela, le premier arbre 31 présente une encoche axiale définissant deux pattes 39 venant entourer la partie tubulaire 41 pour réaliser la liaison.

A noter que pour l'articulation de la molette 40 sur le bouton central 30, on peut remplacer la partie tubulaire 41 insérée dans les deux orifices des oreilles latérales 36/37 (voir figures 2 et 7) par des oreilles munies de proéminences d'axe X2 venant s'insérer dans une partie tubulaire creuse 41 de la molette.

La molette 40 présente aussi, intérieurement, une portion 42 de roue dentée droite qui peut tourner autour du second axe de rotation X2 et qui est en prise avec une crémaillère 43 droite s'étendant le long du premier axe de rotation X1. Cette crémaillère 43 est solidaire d'une tige creuse 44 d'axe X1 qui présente, à son extrémité 44b opposée à la crémaillère 43, une succession de réductions et d'augmentations de diamètre toutes identiques matérialisées par exemple par plusieurs gorges 45 régulièrement espacées axialement. Sur ces gorges 45, une roue latérale 46 à denture droite prend prise, cette roue 46 appartenant à une pièce latérale 47 étant par exemple reliée à un système (non représenté) permettant de faire varier la puissance du flux d'air.

Ainsi, en tournant la molette 40 (figures 10 et 11), on fait tourner la roue dentée 42 qui fait avancer ou reculer la tige creuse 44 selon l'axe X1 grâce à la crémaillère 43. Cette tige creuse 44 fait à son tour tourner la pièce latérale 47 autour d'un troisième axe de rotation X3 perpendiculaire au premier axe par l'intermédiaire des gorges 45 et de la roue dentée 46.

A noter que la portion de roue droite 42 et la crémaillère 43 peuvent être remplacées par un chemin de came (solidaire de la molette) et une tige (solidaire de la tige creuse) perpendiculaire à l'axe X1 dès lors que le mouvement rotatif de la molette 40 se transforme en mouvement de translation de la tige creuse 44.

La tige creuse 44 est montée autour du premier arbre 31 et peut ainsi coulisser axialement le long de celui-ci (voir figures 13 et 14 par exemple). Par ailleurs, comme la rotation du bouton central 30 entraîne la rotation de la molette 40 autour du premier axe X1 (la molette étant encastrée dans la fente 30a du bouton), il est prévu que la portion de roue dentée 42 de la molette 40 reste toujours en prise avec la crémaillère 43, d'une part pour éviter que les dents de la crémaillère et de la portion de roue dentée soient décalées et ne coïncident plus, et d'autre part pour pouvoir entraîner la tige creuse en rotation quand on tourne le bouton central. Ainsi, la molette 40 est munie de deux butées latérales 48 parallèles au premier axe X1 (voir figure 2 en particulier) disposées de part et d'autre de la crémaillère. En tournant le bouton central, ces butées font tourner la crémaillère 43 (et donc la tige creuse 44) dans un sens ou dans l'autre autour de l'axe X1, sans que cela n'ait d'influence sur la roue dentée 46 de la pièce latérale 47. En effet, les dents de la roue dentée 46 coulissent dans les gorges 45 parallèles de la tige 44 lorsque la tige creuse 44 tourne, Mais cela ne permet pas d'entraîner la tige creuse en translation. Bien entendu, le premier arbre 31 tourne en même temps que la tige creuse 44 autour de l'axe X1.

A noter que ce n'est pas nécessairement la molette 40 qui entraîne la crémaillère 43 (et donc la tige creuse 44) en rotation autour de l'axe X1 par l'intermédiaire des butées 48, mais directement le premier arbre 31. En effet, on peut imaginer que le premier arbre 31 présente une section non plus circulaire mais par exemple carrée, rectangulaire ou autre (en H), cette section coopérant avec une forme interne en creux de la tige creuse 44 pour entraîner cette dernière tout en permettant sa translation autour du premier arbre 31 lorsque l'on tourne simplement la molette.

Sur les figures 10 et 11, on peut voir comment coopèrent la molette 40, la crémaillère 43 et la pièce latérale 47. En faisant tourner la molette 40 d'environ 80°, on peut faire tourner la pièce latérale 47 d'environ 120° autour de son axe de rotation.

On notera également que le premier arbre 31 présente un logement 38 (figure 2) pour le passage de la roue dentée 41 de la molette 40.

La molette 40 est bien entendu limitée en rotation par des butées (non représentées) par exemple sous formes de pattes prenant appui contre des parois correspondantes du bouton central.

Une butée axiale existe aussi entre la tige creuse 44 et l'engrenage conique 32 du premier arbre 31 par l'intermédiaire d'un fût 49 axial du support 15 (voir en particulier les figures 13 et 14).

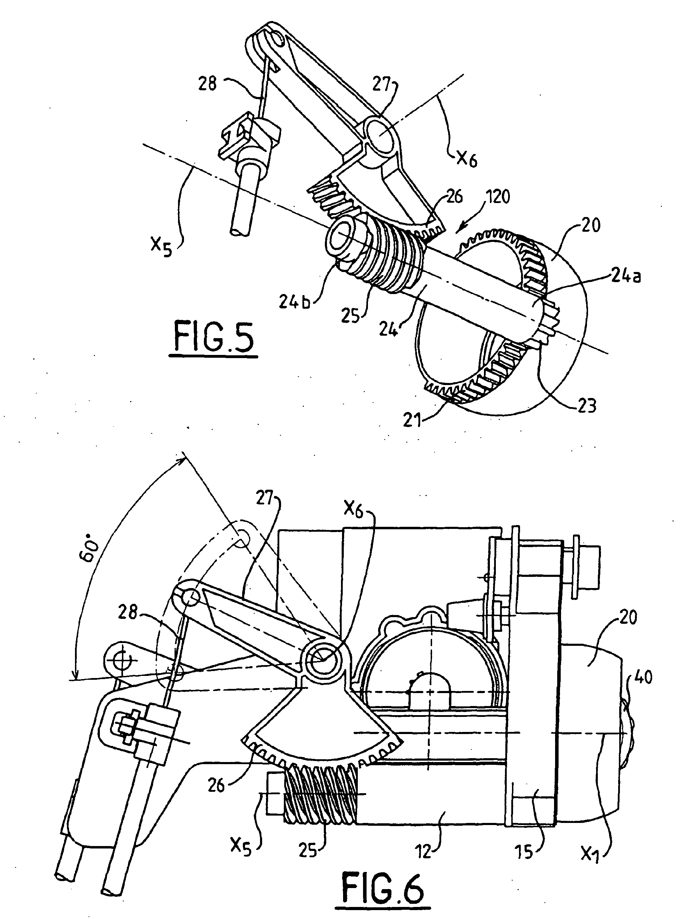

La figure 5 montre enfin la bague 20 et son organe de commande 120. Cette bague 20 peut tourner autour d'un premier axe X1 de façon à agir sur la position spatiale du flux d'air indiquée par les symboles visibles notamment sur la figure 12. Cette bague 20 peut tourner typiquement sur environ 220° à 260° autour de son axe X1 de façon à couvrir toutes les positions proposées de direction du flux d'air (5 dans le cas présent : désembuage seul, désembuage + pieds, pieds seuls, pieds + thorax, et thorax seul). Elle présente extérieurement et périphériquement une portion de roue dentée 21 (invisible de l'habitacle) à pignon droit qui est en prise avec un petit pignon droit 23 complet situé à l'extrémité 24a d'un second arbre 24 (de préférence creux pour alléger le dispositif) tournant autour d'un cinquième axe de rotation X5 parallèle au premier axe X1. L'arbre 24 est donc désaxé par rapport à la bague 20. A son extrémité opposée 24b, l'arbre 24 présente une vis sans fin 25 qui est en prise avec une portion de roue dentée 26 droite d'un second levier de commande 27, cette roue dentée 26 tournant autour d'un sixième axe de rotation X6 perpendiculaire au premier axe. Le second arbre 24 est monté dans un fût 12 d'une pièce de support 15 en matière plastique (Figure 6).

Ainsi, en tournant dans un sens ou dans l'autre la bague 20 autour du premier axe X1, on fait tourner le second arbre 24 (avec un rapport d'environ 3 à 4) autour du cinquième axe X5. Cet arbre fait tourner la roue dentée 26 du levier 27 autour du sixième axe X6, le levier agissant alors, via une tringlerie 28 prévue à cet effet, par exemple sur des volets (non représentés). Le levier 27 pourra décrire un arc de cercle d'environ 60° entre ses deux positions extrêmes correspondant aux positions extrême de la bague 20.

Quoi qu'il en soit, la majorité des mouvements en rotation des différentes pièces sont limités par la configuration des différents engrenages. C'est pour cela par exemple que la bague 20 ne présente qu'une portion de roue dentée 21 qui ne fait pas toute sa circonférence. Pour les mêmes raisons, la roue dentée 26 du second levier 27 ou encore la roue dentée 42 de la molette 40 sont incomplètes.

Ce dispositif est ainsi extrêmement compact et il respecte tout à fait les critères d'esthétisme et d'intégration propres aux planches de bord des véhicules modernes. Il est par ailleurs très facile d'utilisation et très fiable en raison de l'utilisation d'une cinématique faisant appel à des liaisons mécaniques de type pignon, vis sans fin et crémaillère.

Il doit être bien entendu toutefois que ces exemples sont donnés uniquement à titre d'illustration de l'objet de l'Invention dont ils ne constituent en aucune manière une limitation.

Ainsi, quand cela est possible et utile, on peut prévoir de remplacer les engrenages coniques par des engrenages droits et vice versa.

De même, on peut prévoir que l'engrenage de la bague externe 20 soit disposé intérieurement à cette bague.

Toutes les pièces sont en plastique résistant à l'usure, mais il est possible d'en réaliser certaines dans d'autres matériaux, par exemple en composites ou en métal tel que de l'aluminium ou zamac.

## Revendications

1. Dispositif (10) de commande mécanique permettant d'agir sur des organes de commande (130, 140) d'un système (1) de distribution d'un flux d'air pour véhicule automobile, ledit dispositif comprenant au moins deux moyens de commandes distincts (30, 40) à mouvement rotatif agissant respectivement de façon indépendante l'un par rapport à l'autre sur les organes de commande (130, 140), un premier moyen de commande étant monté tournant autour d'un premier axe de rotation et porte un second moyen de commande monté tournant autour d'un deuxième axe de rotation incliné par rapport au premier axe de rotation, **caractérisé en ce que** le premier moyen de commande est un bouton central (30) muni d'une fente (30a) et le second moyen de commande (40) est articulé dans ladite fente (30a).

2. Dispositif (10) selon la revendication 1, **caractérisé en ce que** le second moyen de commande (40) est articulé sur le premier moyen de commande (30) et tourne autour du second axe de rotation X2 qui est perpendiculaire au premier axe de rotation X1.

3. Dispositif (10) selon l'une quelconque des revendications précédentes, **caractérisé en ce que** le second moyen de commande (40) présente des moyens (42) pour transmettre, en tournant autour du second axe de rotation, X2, un mouvement de translation le long du premier axe X1 à une tige (44) qui présente des moyens (45) pour transformer ce mouvement de translation en un mouvement de rotation autour d'un troisième axe de rotation X3 perpendiculaire au premier axe, ce mouvement de rotation étant transmis à une pièce latérale de commande (47).

4. Dispositif (10) selon la revendication 3, **caractérisé en ce que** le second moyen de commande est une molette (40) qui présente intérieurement une portion de roue dentée droite (42) tournant autour du second axe de rotation X2 pour agir sur une crémaillère (43) à denture droite s'étendant le long du premier axe X1 et solidaire de la tige (44), ladite tige étant par ailleurs munie, à l'extrémité (44b) opposée à la crémaillère (43), d'une succession de gorges (45) parallèles qui agissent axialement comme des dents en prise avec une roue dentée (46) de la pièce latérale de commande (47).

5. Dispositif (10) selon l'une quelconque des revendications 1 à 5, **caractérisé en ce que** le bouton central rotatif (30) est lié à une extrémité (31a) d'un premier arbre (31) tournant autour du premier axe de rotation X1, cet arbre (31) présentant des moyens (32) pour transformer son mouvement de rotation en un autre mouvement de rotation autour d'un quatrième axe de rotation X4 perpendiculaire au premier axe X1 pour faire tourner un premier levier de commande (34).

6. Dispositif (10) selon la revendication 5, **caractérisé en ce que** le premier arbre (31) du bouton de commande (30) est muni, à son extrémité opposée (31b), d'un engrenage conique (32) en prise avec une portion de roue dentée conique (33) du premier levier de commande (34).

7. Dispositif (10) selon l'une quelconque des revendications 4 à 6, **caractérisé en ce que** la tige (44) est creuse et entoure le premier arbre (31) du bouton central (30) de façon à pouvoir coulisser axialement à l'extérieur de cet arbre le long du premier axe de rotation X1.

8. Dispositif (10) selon l'une quelconque des revendications 1 à 8, **caractérisé en ce que** le bouton central (30) présente intérieurement deux oreilles (36, 37) espacées et parallèles au premier axe de rotation X1, ces oreilles (36, 37) étant traversées chacune d'un trou d'axe perpendiculaire au premier axe pour recevoir une partie tubulaire interne (41) de la molette (40) pour l'articulation de cette dernière autour du second axe de rotation X2.

9. Dispositif (10) selon l'une quelconque des revendications 1 à 8, **caractérisé en ce que** le bouton central (30) présente intérieurement deux oreilles (36, 37) espacées et parallèles au premier axe de rotation X1, ces oreilles (36, 37) étant munies de protubérances d'axe X2 coopérant avec une partie tubulaire (41) de la molette (40) pour l'articulation de cette dernière autour du second axe de rotation X2.

10. Dispositif (10) selon la revendication 8 ou 9, **caractérisé en ce que** le premier arbre (31) est muni axialement, à son extrémité (31a) de liaison au bouton central (30), d'une encoche (39) définissant une liaison avec la partie tubulaire (41) de la molette (40).

11. Dispositif selon l'une quelconque des revendications 4 à 10, **caractérisé en ce que** la molette (40) présente également des moyens pour entraîner en rotation la tige (44) par l'intermédiaire de la crémaillère (43).

12. Dispositif selon la revendication 11, **caractérisé en ce que** ces moyens sont constitués par deux parois (48) parallèles s'étendant le long du premier axe de rotation X1 et située dans l'environnement proche de la roue dentée pour entourer la crémaillère (43) de part et d'autre en faisant office de butée latérale d'entraînement.

13. Dispositif (10) selon l'une quelconque des revendications précédentes, **caractérisé en ce qu'**il comprend en outre un troisième moyen de commande (20) disposé autour du premier moyen (30) et mobile en rotation autour du premier axe de rotation X1.

14. Dispositif selon la revendication 13, **caractérisé en ce que** le troisième moyen de commande est constitué par une bague externe (20) tournant autour du premier axe de rotation X1 et munie de moyens (21) pour faire tourner un second arbre (24) autour d'un cinquième axe de rotation X5 parallèle au premier axe X1, cet arbre (24) présentant des moyens (25) pour transformer son mouvement de rotation en un autre mouvement de rotation autour d'un sixième axe de rotation X6 perpendiculaire au premier axe X1 pour faire tourner un second levier de commande (27).

15. Dispositif selon la revendication 14, **caractérisé en ce que** la bague présente une portion de pignon droit (21) disposé sur sa périphérie externe et dont les dents sont en prise avec un engrenage droit (23) monté à une extrémité (24a) du second arbre (24), ledit arbre (24) présentant, à son autre extrémité (24b), une vis sans fin (25) agissant sur une portion de roue dentée (26) droite du second levier de commande (27).

16. Dispositif (10) selon l'une quelconque des revendications précédentes, **caractérisé en ce que** le premier moyen de commande (20) agit sur la localisation spatiale du flux d'air.

17. Dispositif (10) selon l'une quelconque des revendications précédentes, **caractérisé en ce que** le second moyen de commande (30) agit sur la température du flux d'air.

18. Dispositif (10) selon l'une quelconque des revendications précédentes, **caractérisé en ce que** le troisième moyen de commande (40) agit sur la puissance du flux d'air.

19. Dispositif (10) selon l'une quelconque des revendications précédentes, **caractérisé en ce que** les moyens de commande (20, 30, 40) et les organes de commande (120, 130, 140) sont réalisés en matière plastique.

## Claims

1. Mechanical control device (10) for acting on control members (130, 140) of an air flow distribution system (1) for a motor vehicle, said device comprising at least two separate rotating control means (30, 40) acting respectively and independently of one another on the control members (130, 140), a first control means rotating about a first rotational axis and bearing a second control means rotating about a second rotational axis inclined with respect to the first rotational axis, **characterized in that** the first control means is a central button (30) having a slot (30a) and the second control means (40) is pivoted in said slot (30a).

2. Device (10) according to Claim 1, **characterized in that** the second control means (40) is pivoted on the first control means (30) and rotates about the second rotational axis X2 which is perpendicular to the first rotational axis X1.

3. Device (10) according to either of the preceding claims, **characterized in that** the second control means (40) has means (42) for transmitting, by rotating about the second rotational axis X2, a translational movement along the first axis X1 to a rod (44) which has means (45) for transforming this translational movement into a rotational movement about a third rotational axis X3 perpendicular to the first axis, this rotational movement being transmitted to a lateral control component (47).

4. Device (10) according to Claim 3, **characterized in that** the second control means is a thumb wheel (40) which has on its inside a portion of a straight-toothed wheel (42) rotating about the second rotational axis X2 so as to act on a straight-toothed rack (43) extending along the first axis X1 and integral with the rod (44), said rod also having, at the opposite end (44b) from the rack (43), a series of parallel grooves (45) which act axially in the manner of teeth engaged with a toothed wheel (46) of the lateral control component (47).

5. Device (10) according to any one of Claims 1 to 5, **characterized in that** the central rotary button (30) is connected to one end (31a) of a first shaft (31) rotating about the first rotational axis X1, this shaft (31) having means (32) for transforming its rotational movement into another rotational movement about a fourth rotational axis X4 perpendicular to the first axis X1 in order to cause a first control lever (34) to rotate.

6. Device (10) according to Claim 5, **characterized in that** the first shaft (31) of the control button (30) has, at its opposite end (31b), a bevel gearing (32) engaged with a portion of bevel gear (33) on the first control lever (34).

7. Device (10) according to any one of Claims 4 to 6, **characterized in that** the rod (44) is hollow and surrounds the first shaft (31) of the central button (30) so as to be able to slide axially on the outside of this shaft along the first rotational axis X1.

8. Device (10) according to any one of Claims 1 to 8, **characterized in that** the central button (30) has on its inside two lugs (36, 37) spaced apart and parallel to the first rotational axis X1, each of these lugs (36, 37) containing a through hole having an axis perpendicular to the first axis in order to receive an internal tubular part (41) of the thumb wheel (40) in order for the latter to be pivoted about the second rotational axis X2.

9. Device (10) according to any one of Claims 1 to 8, **characterized in that** the central button (30) has on its inside two lugs (36, 37) spaced apart and parallel to the first rotational axis X1, these lugs (36, 37) having protuberances of axis X2 which engage with a tubular part (41) of the thumb wheel (40) in order for the latter to be pivoted about the second rotational axis X2.

10. Device (10) according to Claim 8 or 9, **characterized in that** the first shaft (31) has axially at its end (31a) connecting to the central button (30) a notch (39) defining a connection with the tubular part (41) of the thumb wheel (40).

11. Device according to any one of Claims 4 to 10, **characterized in that** the thumb wheel (40) also has means for rotating the rod (44) by means of the rack (43).

12. Device according to Claim 11, **characterized in that** these means consist of two parallel walls (48) extending along the first rotational axis X1 and located in the immediate vicinity of the toothed wheel in order to surround the rack (43) on both sides, acting as lateral drivers.

13. Device (10) according to any one of the preceding claims, **characterized in that** it also comprises a third control means (20) around the first means (30) and able to rotate about the first rotational axis X1.

14. Device according to Claim 13, **characterized in that** the third control means consists of an external ring (20) rotating about the first rotational axis X1 and having means (21) for causing a second shaft (24) to rotate about a fifth rotational axis X5 parallel to the first axis X1, this shaft (24) having means (25) for transforming its rotational movement into another rotational movement about a sixth rotational axis X6 perpendicular to the first axis X1 in order to cause a second control lever (27) to rotate.

15. Device according to Claim 14, **characterized in that** the ring has a portion of straight pinion (21) on its external periphery, the teeth of which are engaged with a straight gearing (23) mounted at one end (24a) of the second shaft (24), said shaft (24) having, at its other end (24b), an endless screw (25) acting on a portion of straight-toothed wheel (26) on the second control lever (27).

16. Device (10) according to any one of the preceding claims, **characterized in that** the first control means (20) acts on the spatial location of the air flow.

17. Device (10) according to any one of the preceding claims, **characterized in that** the second control means (30) acts on the temperature of the air flow.

18. Device (10) according to any one of the preceding claims, **characterized in that** the third control means (40) acts on the strength of the air flow.

19. Device (10) according to any one of the preceding claims, **characterized in that** the control means (20, 30, 40) and the control members (120, 130, 140) are made of plastic.

## Patentansprüche

1. Mechanische Steuervorrichtung (10), die es ermöglicht, auf Steuerorgane (130, 140) eines Luftstrom-Verteilungssystems (1) für ein Kraftfahrzeug einzuwirken, wobei die Vorrichtung mindestens zwei getrennte Steuereinrichtungen (30, 40) mit Drehbewegung aufweist, die je unabhängig voneinander auf die Steuerorgane (130, 140) einwirken, wobei eine erste Steuereinrichtung um eine erste Drehachse drehend montiert ist und eine zweite Steuereinrichtung trägt, die um eine zweite Drehachse drehend montiert ist, die bezüglich der ersten Drehachse geneigt ist, **dadurch gekennzeichnet, dass** die erste Steuereinrichtung ein mit einem Schlitz (30a) versehener, zentraler Knopf (30) ist und die zweite Steuereinrichtung (40) in dem Schlitz (30a) angelenkt ist.

2. Vorrichtung (10) nach Anspruch 1, **dadurch gekennzeichnet, dass** die zweite Steuereinrichtung (40) an die erste Steuereinrichtung (30) angelenkt ist und um die zweite Drehachse X2 dreht, die lotrecht zur ersten Drehachse X1 ist.

3. Vorrichtung (10) nach einem der vorhergehenden Ansprüche, **dadurch gekennzeichnet, dass** die zweite Steuereinrichtung (40) Einrichtungen (42) aufweist, um durch Drehen um die zweite Drehachse X2 eine Translationsbewegung entlang der ersten Achse X1 auf eine Stange (44) zu übertragen, die Einrichtungen (45) aufweist, um diese Translationsbewegung in eine Drehbewegung um eine dritte Drehachse X3 lotrecht zur ersten Achse umzuwandeln, wobei diese Drehbewegung an ein seitliches Steuerbauteil (47) übertragen wird.

4. Vorrichtung (10) nach Anspruch 3, **dadurch gekennzeichnet, dass** die zweite Steuereinrichtung ein Rändelrad (40) ist, das innen einen geraden Zahnradabschnitt (42) aufweist, der um die zweite Drehachse X2 dreht, um auf eine Zahnstange (43) mit gerader Zahnung einzuwirken, die sich entlang der ersten Achse X1 erstreckt und fest mit der Stange (44) verbunden ist, wobei die Stange außerdem an dem Ende (44b) entgegengesetzt zur Zahnstange (43) mit einer Folge von parallelen Rillen (45) versehen ist, die axial wie Zähne in Eingriff mit einem Zahnrad (46) des seitlichen Steuerbauteils (47) wirken.

5. Vorrichtung (10) nach einem der Ansprüche 1 bis 5, **dadurch gekennzeichnet, dass** der zentrale Drehknopf (30) mit einem Ende (31a) einer ersten um die erste Drehachse X1 drehenden Welle (31) verbunden ist, wobei diese Welle (31) Einrichtungen (32) aufweist, um ihre Drehbewegung in einer andere Drehbewegung um eine vierte Drehachse X4 lotrecht zur ersten Achse X1 umzuwandeln, um einen ersten Steuerhebel (34) zu drehen.

6. Vorrichtung (10) nach Anspruch 5, **dadurch gekennzeichnet, dass** die erste Welle (31) des Steuerknopfs (30) an ihrem entgegengesetzten Ende (31b) mit einem konischen Zahnradgetriebe (32) versehen ist, das mit einem konischen Zahnradabschnitt (33) des ersten Steuerhebels (34) in Eingriff steht.

7. Vorrichtung (10) nach einem der Ansprüche 4 bis 6, **dadurch gekennzeichnet, dass** die Stange (44) hohl ist und die erste Welle (31) des zentralen Knopfs (30) umgibt, um axial außerhalb dieser Welle entlang der ersten Drehachse X1 gleiten zu können.

8. Vorrichtung (10) nach einem der Ansprüche 1 bis 8, **dadurch gekennzeichnet, dass** der zentrale Knopf (30) innen zwei Ösen (36, 37) aufweist, die einen Abstand haben und parallel zur ersten Drehachse X1 sind, wobei diese Ösen (36, 37) je von einem Loch mit einer Achse lotrecht zur ersten Achse durchquert werden, um einen inneren rohrförmigen Bereich (41) des Rändelrads (40) zur Anlenkung dieses letzteren um die zweite Drehachse X2 aufzunehmen.

9. Vorrichtung (10) nach einem der Ansprüche 1 bis 8, **dadurch gekennzeichnet, dass** der zentrale Knopf (30) innen zwei Ösen (36, 37) aufweist, die einen Abstand haben und parallel zur ersten Drehachse X1 sind, wobei diese Ösen (36, 37) mit Vorsprüngen einer Achse X2 versehen sind, die mit einem rohrförmigen Bereich (41) des Rändelrads (40) zur Anlenkung dieses letzteren um die zweite Drehachse X2 zusammenwirken.

10. Vorrichtung (10) nach Anspruch 8 oder 9**, dadurch gekennzeichnet, dass** die erste Welle (31) axial an ihrem Verbindungsende (31a) mit dem zentralen Knopf (30) mit einer Kerbe (39) versehen ist, die eine Verbindung mit dem rohrförmigen Bereich (41) des Rändelrads (40) definiert.

11. Vorrichtung nach einem der Ansprüche 4 bis 10, **dadurch gekennzeichnet, dass** das Rändelrad (40) ebenfalls Einrichtungen aufweist, um die Stange (44) mit Hilfe der Zahnstange (43) in Drehung zu versetzen.

12. Vorrichtung nach Anspruch 11, **dadurch gekennzeichnet, dass** diese Einrichtungen aus zwei parallelen Wänden (48) bestehen, die sich entlang der ersten Drehachse X1 erstrecken und sich in der nahen Umgebung des Zahnrads befinden, um die Zahnstange (43) auf beiden Seiten zu umgeben, indem sie als seitlicher Antriebsanschlag dienen.

13. Vorrichtung (10) nach einem der vorhergehenden Ansprüche, **dadurch gekennzeichnet, dass** sie außerdem eine dritte Steuereinrichtung (20) enthält, die um die erste Einrichtung (30) herum angeordnet und um die erste Drehachse X1 drehbeweglich ist.

14. Vorrichtung nach Anspruch 13, **dadurch gekennzeichnet, dass** die dritte Steuereinrichtung aus einem äußeren Ring (20) besteht, der um die erste Drehachse X1 dreht und mit Einrichtungen (21) versehen ist, um eine zweite Welle (24) um eine fünfte Drehachse X5 parallel zur ersten Achse X1 zu drehen, wobei diese Welle (24) Einrichtungen (25) aufweist, um ihre Drehbewegung in eine andere Drehbewegung um eine sechste Drehachse X6 lotrecht zur ersten Drehachse X1 umzuwandeln, um einen zweiten Steuerhebel (27) zu drehen.

15. Vorrichtung nach Anspruch 14, **dadurch gekennzeichnet, dass** der Ring einen geraden Ritzelabschnitt (21) aufweist, der auf seinem Außenumfang angeordnet ist und dessen Zähne mit einem geraden Zahnradgetriebe (23) in Eingriff sind, das an einem Ende (24a) der zweiten Welle (24) montiert ist, wobei die Welle (24) an ihrem anderen Ende (24b) eine Endlosschraube (25) aufweist, die auf einen geraden Zahnradabschnitt (26) des zweiten Steuerhebels (27) einwirkt.

16. Vorrichtung (10) nach einem der vorhergehenden Ansprüche, **dadurch gekennzeichnet, dass** die erste Steuereinrichtung (20) auf die räumliche Lokalisierung des Luftstroms einwirkt.

17. Vorrichtung (10) nach einem der vorhergehenden Ansprüche, **dadurch gekennzeichnet, dass** die zweite Steuereinrichtung (30) auf die Temperatur des Luftstroms einwirkt.

18. Vorrichtung (10) nach einem der vorhergehenden Ansprüche, **dadurch gekennzeichnet, dass** die dritte Steuereinrichtung (40) auf die Leistung des Luftstroms einwirkt.

19. Vorrichtung (10) nach einem der vorhergehenden Ansprüche, **dadurch gekennzeichnet, dass** die Steuereinrichtungen (20, 30, 40) und die Steuerorgane (120, 130, 140) aus Kunststoff hergestellt sind.
